# EUROPEAN PATENT SPECIFICATION

(11) **EP 3 152 603 B1**
(45) Date of publication and mention of the grant of the patent: **09.01.2019**
(21) Application number: 15745725.0
(22) Date of filing: 24.07.2015
(51) Int. Cl.: G02B 5/18, G02B 27/01, F21V 8/00

(54) **OPTICAL COMPONENTS COMPRISING A DIFFRACTION GRATING WITH GRADUALLY CHANGING GROOVE CHARACTERISTICS**
OPTISCHE KOMPONENTE MIT EINEM BEUGUNGSGITTER MIT GRADUELL VARIIERENDEN GITTERGRÄBENEIGENSCHAFTEN
COMPOSANT OPTIQUE AVEC UN RÉSEAUX DIFFRACTIF AVEC DES SILLONS AYANT DES CHARACTÉRISTIQUES QUI VARIENT GRADUELLEMENTS

(30) Priority: 30.07.2014 US 201414447419
(43) Date of publication of application: 12.04.2017
(73) Proprietor: Microsoft Technology Licensing, LLC, Redmond, WA 98052-6399 (US)
(72) Inventor: LEVOLA, Tapani, Redmond, Washington 98052-6399 (US); SAINIEMI, Lauri, Redmond, Washington 98052-6399 (US); SAARIKKO, Pasi, Redmond, Washington 98052-6399 (US)
(74) Representative: Townsend, Martyn
(86) International application number: PCT/US2015/041930
(87) International publication number: WO 2016/018739

(56) References cited:
- EP-A1- 2 752 691
- EP-A2- 2 083 310
- WO-A1-2007/057500
- FR-A1- 2 942 811

## Description

### Background

Optical components can be used in optical systems to alter the state of visible light in a predictable and desired manner, for example in display systems to make a desired image visible to a user. Optical components can interact with light by way of reflection, refractions, diffraction etc. Diffraction occurs when a propagating wave interacts with a structure, such as an obstacle or slit. Diffraction can be described as the interference of waves and is most pronounced when that structure is comparable in size to the wavelength of the wave. Optical diffraction of visible light is due to the wave nature of light and can be described as the interference of light waves. Visible light has wavelengths between approximately 390 and 700 nanometres (nm) and diffraction of visible light is most pronounced when propagating light encounters structures similar scale e.g. of order 100 or 1000 nm in scale.

One example of a diffractive structure is a periodic structure. Periodic structures can cause diffraction of light which is typically most pronounced when the periodic structure has a spatial period of similar size to the wavelength of the light. Types of periodic structures include, for instance, surface modulations on a surface of an optical component, refractive index modulations, holograms etc. When propagating light encounters the periodic structure, diffraction causes the light to be split into multiple beams in different directions. These directions depend on the wavelength of the light thus diffractions gratings cause dispersion of polychromatic (e.g. white) light, whereby the polychromatic light is split into different coloured beams travelling in different directions.

When the period structure is on a surface of an optical component, it is referred to a surface grating. When the periodic structure is due to modulation of the surface itself, it is referred to as a surface relief grating (SRG). An example of a SRG is uniform straight grooves in a surface of an optical component that are separated by uniform straight groove spacing regions. Groove spacing regions are referred to herein as "lines", "grating lines" and "filling regions". The nature of the diffraction by a SRG depends both on the wavelength of light incident on the grating and various optical characteristics of the SRG, such as line spacing, groove depth and groove slant angle. An SRG can be fabricated by way of a suitable microfabrication process, which may involve etching of and/or deposition on a substrate to fabricate a desired periodic microstructure on the substrate. The substrate may be the optical component itself or a production master such as a mould for manufacturing optical components. An example of a surface relief blaze grating having a profile with a slant angle is disclosed in FR-A-2942811. The linewidth of the grating and the slant angle is furthermore varied in two different directions.

SRGs have many useful applications. One example is an SRG light guide application. A light guide (also referred to herein as a "waveguide") is an optical component used to transport light by way of internal reflection (e.g. total internal reflection) within the light guide. A light guide may be used, for instance, in a light guide-based display system for transporting light of a desired image from a light engine to a human eye to make the image visible to the eye. Incoupling and outcoupling SRGs on surface(s) of the light guide can be used for inputting light to and outputting light from the waveguide respectively.

### Summary

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Nor is the claimed subject matter limited to implementations that solve any or all of the disadvantages noted in the Background section.

In a first aspect, an optical component, for use in an optical system, has an outer surface and a diffraction grating is formed by a series of grooves in at least a portion of the outer surface. The grooves are substantially parallel to one another and substantially longer than they are wide. The diffraction grating has a grating period of order 10² or 10³ nm. The diffraction grating exhibits at least a first and a second groove characteristic at each point on the surface portion which both affect the manner in which light incident on the diffraction grating is diffracted at that point. The first and second groove characteristics gradually vary over the surface portion so as to gradually vary the manner in which the incident light is diffracted at different points on the surface portion, and do so with respective gradients that are in different directions to one another at at least some points on the surface portion. The first groove characteristic is one of and the second groove characteristic is a different one of: gradually varying slant which does not change by more than the order of 10⁻³ degrees over a single grating period, gradually varying depth which does not change by more than the order of 10⁻² nm over a single grating period, gradually varying linewidth which does not change by more than the order of 10⁻² nm over a single grating period.

The optical components disclosed herein may or may not be configured for use as waveguides in a display system, and incorporated in such display systems. In a fourth aspect, a display system comprises any such optical component so configured for use as a waveguide, and a light engine coupled to that optical component. The light engine is configured to generate a desired image. The optical component is arranged to transport light of the image from the light engine to a user's eye to make the image visible to the user.

### Brief Description of Figures

To aid understanding of the subject matter, reference will now be made by way of example only to the following drawings in which:
Figure 1A is a schematic plan view of an optical component;
Figure 1B is a schematic illustration of an optical component, shown interacting with incident light and viewed from the side;
Figure 2A is a schematic illustration of a straight binary grating, shown interacting with incident light and viewed from the side;
Figure 2B is a schematic illustration of a slanted binary grating, shown interacting with incident light and viewed from the side;
Figure 2C is a schematic illustration of an overhanging triangular grating, shown interacting with incident light and viewed from the side;
Figure 3 schematically illustrates a first micro fabrication system;
Figure 4A is a schematic illustration of a first microfabrication system during an immersions step of a first microfabrication process;
Figures 4B and 4C schematically illustrate a cross section of a substrate before and after the immersion step of figure 4A respectively;
Figure 5A is a schematic illustration of a first microfabrication system during an immersion step of a second microfabrication process;
Figures 5B and 5C schematically illustrate a cross section of a substrate before and after the immersion step of figure 5A respectively;
Figure 5D schematically illustrates a cross section of the substrate of figure 5C after further etching;
Figure 6A is a schematic illustration of a first microfabrication system during an immersion step of a third microfabrication process;
Figures 6B and 6C schematically illustrate a cross section of a substrate at different stages before the immersion step of figure 6A, and figure 6D schematically illustrates a cross section of that substrate after that immersion step;

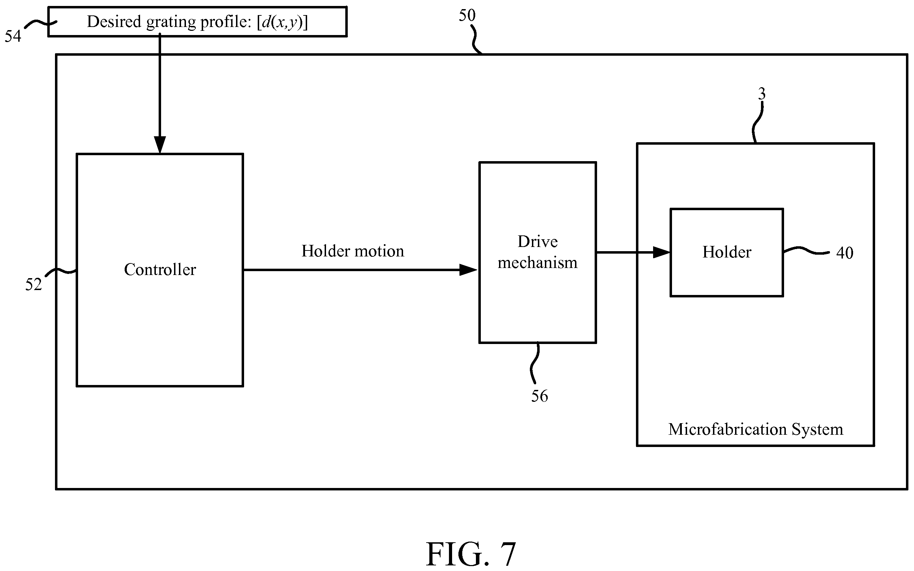

Figure 7 is a schematic block diagram of a first microfabrication apparatus;
Figure 8A is a schematic view of a second microfabrication system from the side;
Figure 8B is a schematic plan view of part of a second microfabrication system;
Figure 9 is a schematic illustration showing exemplary operation of a second microfabrication system;
Figure 10 is a schematic block diagram of a second microfabrication apparatus;
Figure 11A and 11B is a schematic plan views illustrating certain characteristics of some exemplary grating profiles.
It should be noted that the drawings are not necessarily to scale unless otherwise indicated. Emphasis is instead placed on explaining the principles of particular embodiments.

### Detailed Description

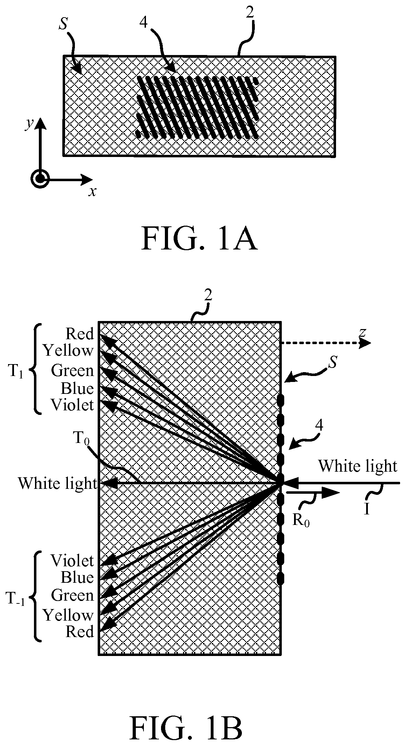

Figures 1A and 1B show from the top and the side respectively a substantially transparent optical component 2, such as a wave guide, having an outer surface S. At least a portion of the surface S exhibits surface modulations that constitute a SRG pattern 4, which is one example of a microstructure. Such a portion is referred to as a "grating area". The surface S lies substantially in a plane defined by x and y axes as shown in figure 1A. The z-axis represents a direction perpendicular to that plane and thus a direction substantially perpendicular to the surface S (referred to as the "the normal" to the surface S).

Figure 1B shows the optical component 2, and in particular the grating 4, interacting with an incoming illuminating light beam I that is inwardly incident on the SRG 4. The light I is white light in this example, and thus has multiple colour components. The light I interacts with the grating 4 which splits the light into several beams directed inwardly into the optical component 2. Some of the light I may also be reflected back from the surface S as a reflected beam R0. A zero-order mode inward beam T0 and any reflection R0 are created in accordance with the normal principles of diffraction as well as other non-zero-order (±n-order) modes (which can be explained as wave interference). Figure 1B shows first-order inward beams T1, T-1; it will be appreciated that higher-order beams may or may not also be created depending on the configuration of the optical component 2. Because the nature of the diffraction is dependent on wavelength, for higher-order modes, different colour components (i.e. wavelength components) of the incident light I are, when present, split into beams of different colours at different angles of propagation relative to one another as illustrated in figure 1B.

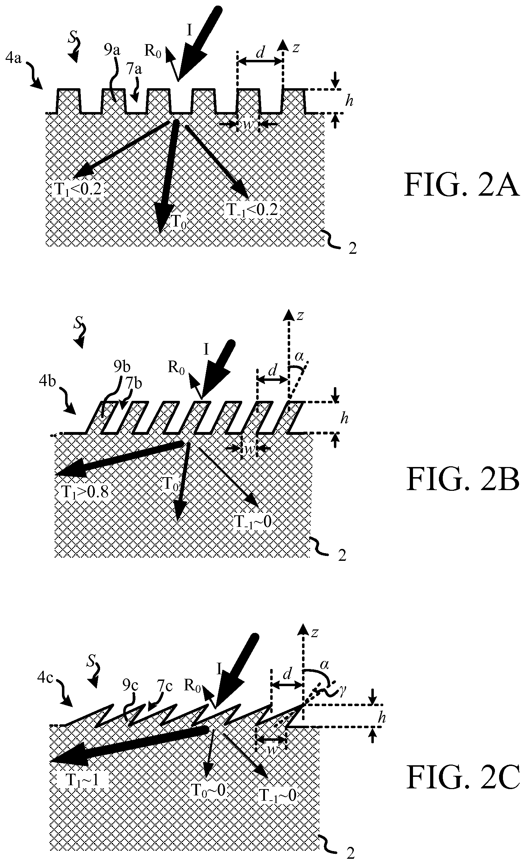

Figures 2A-2C are close-up schematic cross sectional views of different exemplary SRG patterns 4a - 4c (collectively referenced as 4 herein) that may formed by modulation of the surface S of the optical component 2 (which is viewed from the side in these figures). Light beams are denoted as arrows whose thicknesses denote approximate relative intensity (with higher intensity beams shown as thicker arrows).

Figure 2A shows an example of a "straight binary grating" pattern 4a. The straight binary grating 4a is formed of a series of grooves 7a in the surface S separated by protruding groove spacing regions 9a which are also referred to herein as "filling regions", "grating lines" or simply "lines". The pattern 4a has a spatial period of d (referred to as the "grating period"), which is the distance over which the modulations' shape repeats. The grooves 7a have a depth h and have substantially straight walls and substantially flat bases. As such, the filling regions have a height h and a width that is substantially uniform over the height h of the filling regions, labelled "w" in figure 2A (with w being some fraction f of the period: w=f*d).

For a straight binary grating, the walls are substantially perpendicular to the surface S. For this reason, the grating 4a causes symmetric diffraction of incident light I that is entering perpendicularly to the surface, in that each +n-order mode beam (e.g. T1) created by the pattern 4a has substantially the same intensity as the corresponding -n-order mode beam (e.g. T-1), typically less than about one fifth (0.2) of the intensity of the incident beam I.

Figure 2B shows an example of a "slanted binary grating" pattern 4b. The slanted pattern 4b is also formed of grooves, labelled 7b, in the surface S having substantially straight walls and substantially flat bases separated by lines 9b of width w. However, in contrast to the straight pattern 4a, the walls are slanted by an amount relative to the normal, denoted by the angle α in figure 2B. The grooves 7b have a depth has measured along the normal. Due to the asymmetry introduced by the non-zero slant, ±n-order mode inward beams travelling away from the slant direction have greater intensity that their ∓n-order mode counterparts (e.g. in the example of figure 2B, the T1 beam is directed away from the direction of slant and has usually greater intensity than the T-1 beam, though this depends on e.g. the grating period d); by increasing the slant by a sufficient amount, those ∓n counterparts can be substantially eliminated (i.e. to have substantially zero intensity). The intensity of the T0 beam is typically also reduced very much by a slanted binary grating such that, in the example of figure 2B, the first-order beam T1 typically has an intensity of at most about four fifths (0.8) the intensity of the incident beam I.

The binary patterns 4a and 4b can be viewed as spatial waveforms embedded in the surface S that have a substantially square wave shape (with period d). In the case of the pattern 4b, the shape is a skewed square wave shape skewed by α.

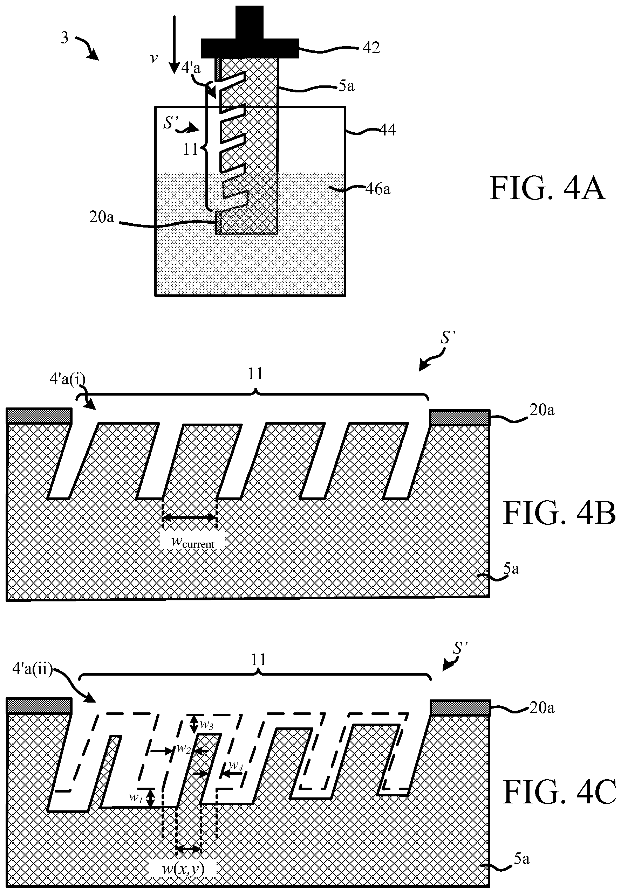

Figure 2C shows an example of an "overhanging triangular grating" pattern 4c which is a special case of an overhanging "trapezoidal grating" pattern. The triangular pattern 4c is formed of grooves 7c in the surface S that are triangular in shape (and which thus have discernible tips) and which have a depth has measured along the normal. Filling regions 9c take the form of triangular, tooth-like protrusions (teeth), having medians that make an angle α with the normal (α being the slant angle of the pattern 4c). The teeth have tips that are separated by d (which is the grating period of the pattern 4c), a width that is w at the base of the teeth and which narrows to substantially zero at the tips of the teeth. For the pattern of figure 4c, w≈d, but generally can be w<d. The pattern is overhanging in that the tips of the teeth extend over the tips of the grooves. It is possible to construct overhanging triangular grating patterns that substantially eliminate both the transmission-mode T0 beam and the ∓n-mode beams, leaving only ±n-order mode beams (e.g. only T1). The grooves have walls which are at an angle γ to the median (wall angle).The pattern 4c can be viewed as a spatial waveform embedded in S that has a substantially triangular wave shape, which is skewed by α.

The grooves and spacing regions that form the patterns 4a-4c constitute surface modulations over the surface S.

In general, surface modulations over a surface result in surface protrusions and exhibit what is referred to herein as a "modulation width", which is a characteristic scale along the surface of those surface modulations and which can be generally be defined in relation to a characteristic width of those protrusions that arise from the modulation over that surface. Generally, modulations over a surface can arise at least from extraneous material deposited on that surface, from modulations of that surface itself, or a combination of both. "Modulation width" is equivalently referred to as "grating linewidth" herein when the modulations form a diffraction grating pattern (with the grating linewidth being the width of the grating lines).

Such modulations also have what is referred to herein as a "modulation depth" ("groove depth" for grating patterns) which is a characteristic scale perpendicular to the surface of those surface modulations and which can be generally be defined in relation to a characteristic depth of the protrusions, and a "modulation slant" ("groove depth" for grating patterns) which is a characteristic slant angle of those protrusions relative to the surface.

In the case of patterns 4a-4c, the grooves 7a-7c (collectively referenced as 7) and spacing regions 9a-9c (collectively referenced as 9) that form the patterns 4a-4c constitute modulations of the surface S itself, which exhibit a modulation width that can be defined as a characteristic width of the protruding filling regions 9. In the case of patterns 4a and 4b, protruding filling regions have a width that is substantially uniform over their height h and equal to w, and the modulation width can be defined as w. In the case of the pattern 4c, protruding filling regions have a width w at the base of the protrusions, and the modulation width can be usefully defined, for instance, as the base width w (although it can also be defined in terms of a filling region width at some other elevation). The patterns 4 also have a modulation depth and slant which can be defined as h and α respectively.

Other gratings are also possible, for example other types of trapezoidal grating patterns (which may not narrow in width all the way to zero), sinusoidal grating patterns etc. and have a modulation width that can be readily defined in a suitable manner. Such other patterns also exhibit depth h, linewidth w, slant angle α and wall angles γ which can be defined in a similar manner to figure 2A-C

In light guide-based display applications (e.g. where SRGs are used for coupling of light into and out of a light guide of the display system), d is typically between about 250 and 500 nm, and h between about 30 and 400 nm. The slant angle α is typically between about -45 and 45 degrees and is measured in the direction of grating vector, which is perpendicular to the grating lines.

An SRG has a diffraction efficiency defined in terms of the intensity of desired diffracted beam(s) (e.g. T1) relative to the intensity of the illuminating beam I, and can be expressed as a ratio η of those intensities. As will be apparent from the above, slanted binary gratings (e.g. 4b - up to η≈0.8 if T1 is the desired beam) can achieve higher efficiency than non-slanted grating (e.g. 4a - only up to about η≈0.2 if T1 is the desired beam). With overhanging trapezoidal gratings, from where the triangular grating is an example, it is possible to achieve even efficiencies of η≈1 for one mode.

The performance of a SRG light guide-based display is strongly dependent on the efficiency of the gratings and their dependence on the incidence angle of the incoming light.

Various manufacturing techniques described below enable gratings (including, for example, binary, trapezoidal (e.g. triangular) and sinusoidal gratings) to be manufactured with variable w. That is, with modulation widths which vary as a function w(x,y) of position on the surface S. The techniques described below also enable such gratings to be manufactured with variable h and/or α. That is, with depths and/or slants which vary as respective functions h(x,y) and α(x,y) of position on the surface S.

Optical components with surface relief gratings can manufactured, in accordance with any of the techniques disclosed herein, in a manner that makes them suitable for use as waveguides in a display system. A light engine of the display system can thus be coupled to the optical component. The optical component is arranged in the system so as to transport light of a desired image when generated by the light engine to a user's eye to make the image visible to the user. In some applications, the display system may be wearable by a user. For example, the display system may be embodied in a wearable headset with the waveguide forward of the wearer's eye when worn by the wearer, and the system arranged to output light to the eye that has been transported from the light engine. Surface relief gratings on the waveguide manufactured using any of the techniques discussed herein can in this context function as, for instance, an incoupling grating for receiving light from the light engine, an outcoupling grating for outputting transported light to the eye, or an intermediate grating elsewhere on the light guide to facilitate undisrupted transportation of the image light to help preserve the image in transit.

The techniques described below are micro fabrication techniques. Microfabrication refers to the fabrication of desired structures of micrometre scales and smaller. Microfabrication may involve etching of and/or deposition on a substrate (and possibly etching of and/or deposition on a film deposited on the substrate) to create the desired microstructure on the substrate (or film on the substrate). As used herein, the term "patterning a substrate" or similar encompasses all such etching of/deposition on a substrate or substrate film.

Wet etching involves using a liquid etchant to selectively dislodge parts of a film deposited on a surface of a substrate and/or parts of the surface of substrate itself. The etchant reacts chemically with the substrate/film to remove parts of the substrate/film that are exposed to the etchant. The selective etching may be achieved by depositing a suitable protective layer on the substrate/film that exposes only parts of the substrate/film to the chemical effects of etchant and protects the remaining parts from the chemical effects of the etchant. The protective layer may be formed of a photoresist or other protective mask layer. The photoresist or other mask may be deposited over the whole of an etching surface area then exposed and developed to create a desired "image", which is then engraved in the substrate/film by the etchant to form a three dimensional structure.

Dry etching involves selectively exposing a substrate/film (e.g. using a similar photoresist mask) to a bombardment of energetic particles to dislodge parts of the substrate/film that are exposed to the particles (sometimes referred to as "sputtering"). An example is ion beam etching in which parts are exposed to a beam of ions. Those exposed parts may be dislodged as a result of the ions chemically reacting with those parts to dislodge them (sometimes referred to as "chemical sputtering") and/or physically dislodging those parts due to their kinetic energy (sometimes referred to as "physical sputtering").

In contrast to etching, deposition - such as ion-beam deposition or immersion-based deposition - involves applying material to rather than removing material from a substrate/film.

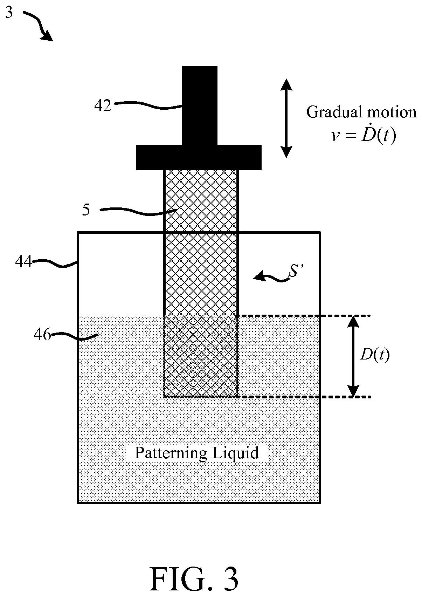

In the following examples, a substrate (5 - figure 3) has an outer surface S' that patterned on by way of microfabrication. The final patterned substrate may itself be for use as optical components (e.g. wave guides) in an optical system (e.g. display system) or it may for use as a production master for manufacturing such components e.g. moulds for moulding such components from polymer. Where the substrate 5 is an optical component, the substrate's surface S' is the same as the surface S shown figures 2A-2C. When the substrate 5 is a master (e.g. a mould) S' still corresponds to S in that the structure of S' is transferred (that is, copied) to S as part the manufacturing (e.g. moulding) process. The surface S' lies substantially in a plane referred to herein as the xy-plane having x and y coordinates equivalent to those shown in figure 1A in relation to the surface S, with points in the xy-plane (and thus on the surface S') being denoted (x,y).

The substrate is patterned over at least a portion of its surface (grating area) to form a grating, which may then be transferred to other components where applicable. The dimensional size of the grating area (e.g. being of order mm, cm or higher) is significantly larger than the grating period - there typical being e.g. thousands of lines/grooves per mm of grating. As such, even though there are a discrete number of lines/grooves in the grating area, this number is sufficiently large that grating characteristics can be viewed as mathematical functions over a substantially continuous domain of geometric points ***r*** = (*x*, *y*) (bold typeface denoting xy-vectors). For this reason, the general notation c(x,y) (or similar) is adopted for grating characteristics hereinbelow. Where applicable, references to "points" on surface portion (or similar) are to be construed accordingly, including in the claims below.

The linewidth w(x,y), grating depth h(x,y) and slant α(x,y) are examples of such grating characteristics. The techniques below enable grating patterns to be manufactured on a surface portion with linewidth w(x,y), depth h(x,y) and slant α(x,y) that vary over that surface portion and, moreover, which do so gradually i.e. as substantially continuous mathematical functions over said substantially continuous domain of points.

A grating characteristic *c*(***r***) = *c*(*x*, *y*) is considered to spatially vary over a surface portion in the present context provided that grating characteristic *c*(***r***) changes by an overall amount Δ*C* = max *c*(***r***) - min *c*(***r***) that is significant as compared with a characteristic scale *C* of the grating characteristic *c*(***r***) itself, such as *C* = max|*c*(***r***)|. Examples of significant changes include when Δ*C* is the same order of magnitude, or one order of magnitude lower than, C. For example, for the grating patterns mentioned above with reference to figures 2A-2C, the linewidth would be considered to be spatially varying in the present context at least when the linewidth changes by an overall amount Δ*W* of order of 5% of the period d or more; the depth would be considered to be spatially varying in the present context at least when the depth changes by an overall amount Δ*H* of order of 10nm or more; the slant would be considered to be spatially varying in the present context at least when the slant changes by an overall amount ΔA of order of 5 degrees or more. Where a grating characteristic exhibits only small, unintended variations, such as small, unintended variations arising from undesired manufacturing inaccuracies or imprecisions and/or other variations restricted to a similar scale, that characteristic is not considered to be spatially varying in the context of the present disclosure.

Spatial variations are considered gradual (substantially continuous) providing that grating characteristic's spatial gradient ∇*c*(*x*, *y*)*-* where ∇ = (∂*ₓ*, ∂*_{y}*) is the gradient function for the xy-plane, is sufficiently small at all points ***r*** = (*x*, *y*) on the surface portion so that changes in the grating characteristic *c*(***r***) over small distances of order *d* are always at least 3 orders of magnitude smaller than Δ*C* at all points ***r*** i.e. so that |∇*c*(***r***)| * *d*∼10⁻³ * Δ*C* or less for all ***r*** on the surface portion.

For instance, the disclosed techniques enable gratings to be manufactured with gradually varying linewidth w(x,y) which does not change by more than the order of 10⁻² nm over a single grating period d, itself of order 10² or 10³ nm, so that the linewidth gradient ∇*w*(*x*, *y*) does not exceed an amount of order of 10⁻⁴ or 10⁻⁵ - at any point on the surface portion. Gratings can also be manufactured with a gradually varying depth h(x,y) which does not change by more than of the order of 10⁻² nm over a single grating period so that the depth gradient ∇*h*(*x*, *y*) does not exceed an amount of the order of 10⁻⁴ or 10⁻⁵ - at any point on the surface portion. Gratings can also be manufactured with gradually varying slant α(x,y) which does not change by more than about 10⁻³ degrees over a single grating period so that the slant gradient ∇*α*(*x*, *y*) does not exceed an amount of the order of 10⁻⁵ or 10⁻⁶ degrees/nm - at any point on the surface portion.

### First type of process: for manufacturing gratings with variable linewidth w(x,y).

A first type of microfabrication process for manufacturing gratings with variable linewidth w(x,y) will now be described.

Figure 3 is a schematic illustration showing components of a first microfabrication system 3. The microfabrication system 3 can be used in microfabrication process for fabricating microstructures on a substrate 5. The system 3 comprises a substrate holder 42 and a liquid container 44 that contains a fluid (liquid) 46. The substrate holder supports the substrate 5. The fluid 46 is for patterning the substrate 5, and in the following examples is a liquid etchant for selectively removing material from at least a portion of the surface S' which can be substrate material of the substrate itself or some other material that is deposited on the surface S' which is not shown in figure 3 but which is shown in later figures where applicable. Other material of this nature is referred to herein as "extraneous deposits" on S'.

The substrate 5 is supported by the holder 42, and the holder 42 and the container 44 are arranged, in a manner that enables the substrate 5 when supported to be lowered into and/or raised out of the fluid 44 at a vertical velocity v, thereby immersing the substrate 5 in and/or removing the substrate 5 from the fluid 44 in an immersion step of a microfabrication process. In either case, an immersion depth D(t) of the substrate 5 in the fluid 46 is changed over time t as *Ḋ*(*t*) = *ν* where *Ḋ*(*t*) is the rate of chance of D(t). The immersion depth D(t) is shown in figure 3 as a distance between the far end of the substrate 5 from the holder 42 and the surface of the fluid 46, but can be defined as any distance measure that conveys a current extent to which the substrate 5 is currently immersed in the patterning liquid 42. The liquid 5 patterns the substrate when immersed in the liquid by reacting with the substrate or with extraneous deposits on the substrate to either remove material from or deposit material on the surface S', depending on the nature of the fluid 46. Removed material may be substrate material of the substrate itself or extraneous material deposited on the substrate.

Prior to the immersion step, the substrate 5 has initial (current) surface modulations over at least a portion of the substrate's surface S'. These surface modulations exhibit a substantially uniform modulation width over the surface portion i.e. which is substantially the same at all points (x,y) on that surface portion. This modulation width is a characteristic width (e.g. base width) of surface protrusions resulting from these current modulations, which can be formed by protruding extraneous material deposited on S' and/or by protruding substrate material of the substrate itself. These surface modulations constitute a current diffraction grating pattern that exhibits a substantially uniform linewidth of grating lines over the surface portion (i.e. which is substantially the same at all xy-locations on the surface portion).

The total amount of time for which a point (x,y) on the surface S' remains immersed in the liquid 46 is referred to at the immersion time of that point. Whilst that point is immersed, the patterning fluid acts to remove material from or deposit material on any surface protuberances at that point and thus changes the modulation width at that point. The amount of material that is removed/deposited at that point depends on the immersion time of that point. Changing the immersion depth D(t) of the substrate in the patterning fluid 46 results in different points on the surface S' being immersed in the fluid 46 for different amounts of time so that the modulation width is changed by different amounts at different points on S'. In other words, the initial surface modulations are changed to new surface modulations exhibiting a spatially varying modulation width w(x,y) that varies over S' i.e. that varies as a function of xy-position. This causes the current diffraction pattern to be correspondingly changed to a new diffraction grating pattern that exhibits a spatially varying linewidths of grating lines over S' i.e. that also varies over the surface S' as a function of xy-position.

The immersion/removal of the substrate is gradual in that the immersion depth D(t) of the substrate 5 in the fluid 46 is gradually changed over time (i.e. *Ḋ*(*t*) = *ν* is slow). Herein a "gradual change in an immersion depth" or similar refers to the immersing of a substrate in and/or the raising of a substrate out of a patterning liquid (e.g. etchant) sufficiently slowly for the effects of the liquid (e.g. etching effect) on the modulation width at points on the substrate's surface which remain immersed in the liquid for more time to be measurably greater than the effects of the liquid on the modulation width at points on that surface which remain immersed in the liquid for less time. Whether or not particular motion is considered gradual in context will depend on factors such as a characteristic patterning (e.g. etching) speed of the liquid.

In the configuration of figure 3, the motion v of substrate is substantially linear i.e. the substrate holder 42 is moved upwards or downwards in substantially the direction of gravity.

Exemplary microfabrication processes which use the microfabrication system 3 in various configurations will now be described with reference to figures 4A-6D. Substrates having a fused silica composition are used in these examples, however this is just an exemplary substrate material and the techniques may be applied to substrates made of different materials. It should be noted that these figures are not to scale and in particular that the distance scales of the various surface modulations are greatly enlarged to aid illustration. In practice, the changes in the linewidths are gradual such that the difference in linewidths between neighboring lines is hardly visible (though the effects can be observed from the manner in which light is diffracted). For example, an exemplary pattern may have a period of 500nm and have a change of linewidth of 50nm in 1mm distance along the surface. There are 2000 lines in one mm and thus the difference in linewidths between neighboring lines in this case is only 0.025nm.

Figure 4A is a schematic illustration of the system 3 during an immersion step of a first microfabrication process, which is a first dip etching process in which a first substrate 5a is itself etched. That is, a first process in which a first type of patterning liquid is used, which is a first etchant 46a that reacts with the substrate 5a itself to remove substrate material of the substrate 5a itself. In this example, the etchant 4a reacts with the fused silica from which the substrate 5a is composed, although this is only an example and the same type of process may be applied to substrates made from different materials.

The substrate 5a has surface modulations over a portion 11 of the substrate's surface S', which are surface modulations of the surface portion 11 itself formed by grooves and spacing regions in the surface portion 11. These surface modulations constitute a first grating pattern 4'a, which is shown as a binary grating pattern but which could be a different grating pattern (e.g. triangular).

The substrate 5a is supported by the holder 42 and is gradually lowered into the etchant 46a during the dip etching. A protective mask 20a is selectively deposited on the substrate's surface S' to expose only the surface portion 11, and which protects the remaining portion of the surface S' (which are not intended for dip etching) from the effects of the etchant 46a so that only the surface portion 11a is etched. The other surfaces of the substrate 5a may also be similarly protected (not shown in figure 4A).

Figure 4B shows a cross section of the substrate 5a before the immersion step of figure 4A. At this point, the grooves and filling regions constitute initial surface modulations of the surface portion S', which are substantially uniform in that the lines in the surface portion 11 have substantially the same width as one another w_{current}, which is the linewidth before the immersion of the substrate 5a. The uniform filling regions constitute an initial grating pattern 4'a(i). The initial surface modulations can be formed, for instance, using known etching techniques e.g. ion beam etching of the substrate 5a.

Figure 4C shows a cross section of the substrate 5a after the immersion step of figure 4A has been completed. In figure 4C, the left hand side of the substrate 5a corresponds to the far end of the substrate 5a from the holder 42 as shown in figure 4A i.e. the left end of the substrate is the end that was first immersed in the etchant 46a and which was thus subject to the longest immersion time.

The etchant 46a attacks all fused silica surfaces exposed to the etchant. The etching by the etchant 46a is substantially isotropic (i.e. the etching speed is the same in all directions), which affects the filling regions as shown in figure 4C (note the dotted lines in figure 4C serve to illustrate the original extent of the filling regions before etching). For each filling region, a width of substrate material w2, w4 is removed from the left hand and right hand side of that filling region respectively; an amount of substrate material denoted by w3 is removed from the top of that region and an amount of material w1 is removed from the groove left-adjacent to that region. The amounts w1-w4 depend on the total time for which that region is immersed in the etchant 46a, which varies as a function of xy-position. Thus, it will be appreciated that w1-w4 vary as a function of xy-position although not explicitly denoted as such. For any given filling region at a point (x,y),an approximation w1≈w2≈w3≈w4≈Δw(x,y) can be made, wherein Δw(x,y) is determined by the speed of the etching and the immersion time at that point (x,y). Thus the width of that filling region is reduced to about w_{current}-2*Δw(x,y). Thus, it can be seen that an effect of the immersion step is to change the initial surface modulations to new surface modulations that exhibit a spatially varying modulation width w(x,y)≈w_{current}-2*Δw(x,y) that varies over the surface portion 11 i.e. as a function of xy-position. Because the width of each filling region is changed by a slightly different amount, this changes the initial grating pattern 4'a(i) to a new grating pattern 4'a(ii) that exhibits a spatially varying grating linewidth w(x,y) that varies over the surface portion 11 i.e. as a function of xy-position, as illustrated in figure 4C.

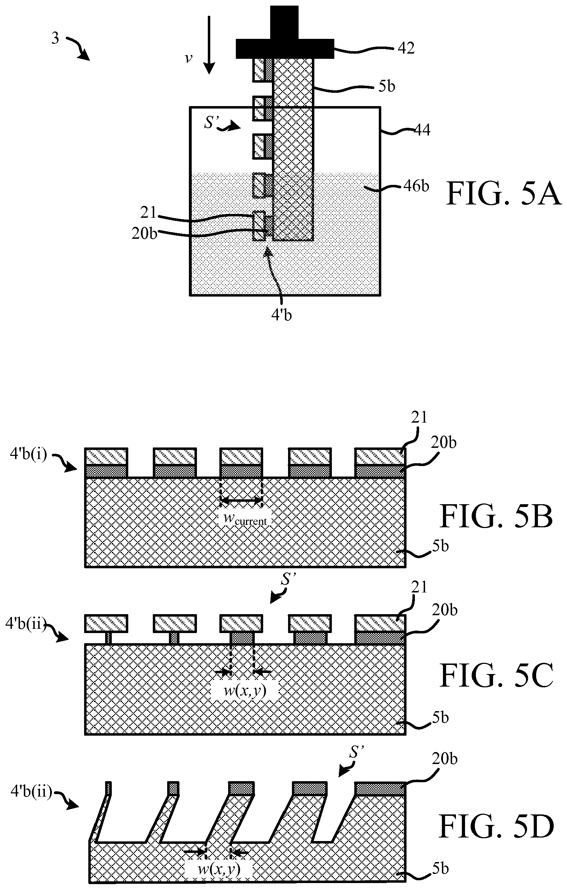

Figure 5A is a schematic illustration of the system 3 during an immersion step of a second microfabrication process, which is a second dip etching process in which extraneous material 20b deposited on a second substrate 5b is etched (rather than the substrate 5b itself). That is, a second process in which a second type of patterning liquid is used, which is a second etchant 46b that reacts with this extraneous material to remove some of that material. In this example, the extraneous material is chromium (Cr), although this is only an example and the same type of process may be applied to substrates with different extraneous deposits, such as different metals.

The substrate 5b has surface modulations which are formed by intermittent chromium deposits in the form of chromium lines 20b deposited on the substrate's surface S'. The chromium lines 20b are themselves covered by photoresist 21. The chromium lines form a partial film that leaves regions of the substrate's surface S' exposed but other regions covered. These surface modulations constitute a second grating pattern 4'b.

The substrate 5b is supported by the holder 42 and is gradually lowered into the etchant 46b during the dip etching.

Figure 5B shows a cross section of the substrate 5b before the immersion step of figure 5A. At this point, the chromium deposits 20b constitute initial, substantially uniform surface modulations over the surface S' in that the individual chromium lines have substantially the same width w_{current} as one another - which is the modulation width before the immersion of the substrate 5b.

The initial surface modulations can be formed using known etching techniques. For example, one manner of achieving this involves first coating the whole (or most) of the surface S' in a mask layer, which would be a chromium layer in this example. The mask layer is then covered with a photoresist. A two-dimensional image of a desired grating pattern is then projected onto the photoresist using conventional techniques. The photoresist is then developed to remove either the exposed parts or the non-exposed parts (depending on the composition of the photoresist), leaving selective parts of the mask layer visible (i.e. revealing only selective parts) and the remaining parts covered by the remaining photoresist. The uncovered parts of the mask layer can then be removed using conventional etching techniques e.g. a Reactive Ion Etching (RIE) process which removes the uncovered parts of the mask but not the parts covered by the photoresist, and which does not substantially affect the substrate itself.

The chromium lines constitute an initial diffraction grating pattern 4'b(i) exhibiting a substantially uniform grating linewidth w_{current} over the surface S' i.e. which is substantially the same at all points (x,y) on the surface S'.

The etchant 46b attacks all non-protected chromium surfaces (not protected by the photoresist 21). The photoresist 21 protects the top parts of the chromium lines and the fused silica (i.e. the substrate 5b itself) protects the bottom part of the chromium lines. Thus, only the sides of the chromium lines are exposed to the etchant 4b during the immersion step of figure 5A.

Figure 5C shows a cross section of the substrate 5b after the immersion step of figure 5A has been completed. In figure 5C, the left hand side of the substrate 5b corresponds to the far end of the substrate 5b from the holder 42 as shown in figure 5A i.e. the left end of the substrate is the end that was first immersed in the etchant 46b and which was thus subject to the longest immersion time.

A respective amount of chromium is removed from the sides of each chromium line. That amount depends on the total time for which that line is immersed in the etchant 46b, which varies as a function of xy-position. Thus, it will be appreciated that said amount varies as a function of xy-position. Thus, it can be seen that an effect of the immersion step is to change the initial surface modulations to new surface modulations that exhibit a spatially varying modulation width w(x,y) that varies over the surface S' i.e. as a function of xy-position. Because the width of each chromium line is changed by a slightly different amount, this changes the initial grating pattern 4'b(i) to a new grating pattern 4'b(ii) that exhibits a spatially varying grating linewidth w(x,y) that varies over the surface S' i.e. as a function of xy-position, as illustrated in figure 5C.

After completions of the immersion step of figure 5A, the substrate can then be subjected to a further etching process in which the remaining chromium serves as an etching mask. This could for example be ion beam etching of the substrate 5b, in which the remaining chromium protects the covered regions of the substrate (and only those regions) from the effects of an ion beam, or further dip etching but of the substrate 5b itself, in which the chromium protects the covered regions (and only those regions) from the effect of a liquid etchant that reacts with the substrate itself (which could have the same composition as the etchant 4a of figure 4A). In this manner, the diffraction pattern 4'b(ii) can be transferred to the substrate 5b as illustrated in figure 5D, which is a cross section of the substrate 5b following such a further etching process.

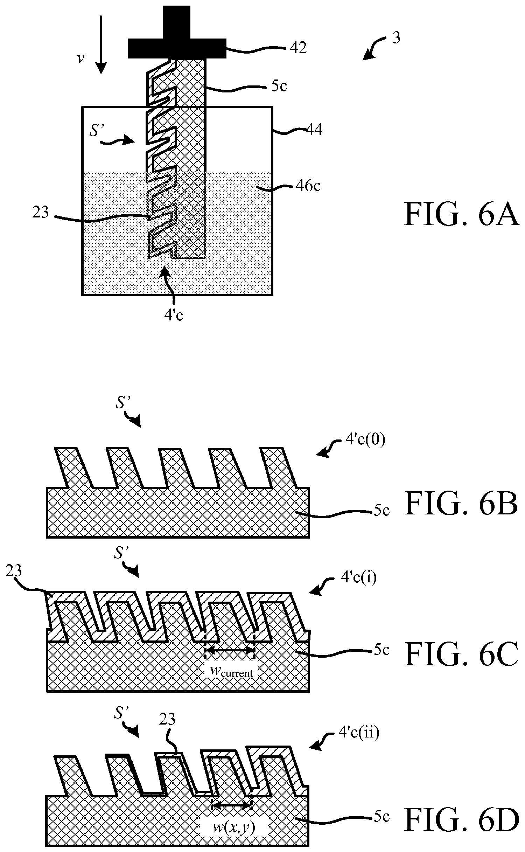

Figure 6A is a schematic illustration of the system 3 during an immersion step of a third microfabrication process, which is a third dip etching process in which other extraneous material deposited on a third substrate 5c is etched (rather than the substrate 5c itself). That is, a third process in which a third type of patterning liquid is used, which is a third etchant 46c that reacts with this extraneous material to remove some of that material. In this example, the extraneous material is silicone dioxide (SiO₂), which reacts with the etchant 4c although this is only an example and the same type of process may be applied to substrates with different extraneous deposits.

The substrate 5c has surface modulations which are formed by a combination of modulations of the substrate's surface S' itself and a layer 23 of silicone dioxide deposited on the modulated surface S'. These surface modulations constitute a third diffraction pattern 4'c.

The substrate 5c is supported by the holder 42 and is gradually lowered into the etchant 46c during the dip etching.

Figures 6B and 6C shows cross sections of the substrate 5c at different stages before the immersion step of figure 6A.

Figure 6B shows the substrate 5c before the silicone dioxide layer 23 has been applied. A preliminary grating pattern 4'c(0) is formed by only the modulations of the surface S' itself, specifically by substantially uniform grooves and filling regions which can be created e.g. using known etching techniques.

Figure 6C shows the substrate 5c after the silicone dioxide layer 23 has been applied to the modulated surface S'. The silicone dioxide layer is a substantially even layer that is applied using atomic layer deposition (ALD). This effectively increases a fill factor of the modulations in the surface S' by enlarging the filling regions. This effectively creates surface modulations, formed by the combination of the modulations in the surface S' and the deposited silicone dioxide, that have a modulation width w_{current} that is wider than that of the modulations in the surface S' alone, as illustrated in figure 6C. The combined modulations are substantially uniform modulations in that the width w_{current} is substantially constant over the surface S' and constitute an initial (i.e. pre-etching) diffraction grating pattern 4'c(i).

The etchant 46c attacks the silicone dioxide 23 deposits but not the fused silica of the substrate 5c itself. Figure 6D shows a cross section of the substrate 5c after the immersion step of figure 6A has been completed. In figure 6C, the left hand side of the substrate 5c corresponds to the far end of the substrate 5c from the holder 42 as shown in figure 6A i.e. the left end of the substrate is the end that was first immersed in the etchant 46c and which was thus subject to the longest immersion time.

A respective amount of silicone dioxide 23 is removed at each immersed point (x,y). That amount depends on the total time for which that point is immersed in the etchant 46c, which varies as a function of xy-position. Thus, it will be appreciated that the width of each enlarged filling region is reduced by an amount that depends on the xy-position of that filling region, which amounts to a reduction of the fill factor at that point. Thus, it can be seen that an effect of the immersion step is to change the initial surface modulations to new surface modulations that exhibit a spatially varying modulation width w(x,y) (or equivalently a spatially varying, modulated fill factor) that varies over the surface S' i.e. as a function of xy-position. Because the width of each enlarged filling region is changed by a slightly different amount, this changes the initial grating pattern 4'c(i) to a new grating pattern 4'c(ii) that exhibits a spatially varying grating linewidth w(x,y) that varies over the surface S' i.e. as a function of xy-position, as illustrated in figure 6C.

The gradual changing of the immersion depth of the substrate results in a linewidth profile that changes correspondingly gradually (i.e. substantially continuously over a significantly larger distance scale than the grating period d - see above). The scale over which the linewidth w(x,y) changes is sufficiently large compared to the grating period d (that is, the spatial variations in linewidth w(x,y) are sufficiently gradual over the substrate's surface) that the linewidth w(x,y) can be effectively considered as a substantially continuous mathematical function of xy-position that is defined at every point (x,y) in the relevant portion of the xy-place.

As will be apparent, the above described processes result in the creation of new grating patterns that have grating linewidths w(x,y) that vary as a function of xy-position and which thus have gradients ∇*w*(*x*, *y*) (where ∇ = (∂*ₓ*, ∂*_{y}*) is the gradient function for the xy-plane) that are non-zero at at least some xy-locations.

In the above, substantially linear substrate motion is considered that charges an immersion depth D(t). As will be appreciated, this results in grating linewidth profiles w(x,y) that have gradients ∇*w*(*x*, *y*) substantially aligned with the direction of the linear motion relative to the surface S'. In alternative microfabrication apparatus configurations more complex grating profiles can be created by introducing rotational motion of the substrate 5 in addition to the linear motion that have grating linewidth gradients ∇*w*(*x*, *y*) whose direction can vary at different points in the xy-plane.

It should be noted that the immersion methods described above do not change the grating period d of patterns to which they are applied. For some grating patterns, the period is substantially constant everywhere on the surface (in which case it remains constant following the immersion); in other cases, the period is not constant to begin with (and is again unchanged by the immersion).

In the above examples of figures 4A-6D, a substrate is gradually immersed in a patterning liquid though it will be appreciated that similar effects can be achieved by alternatively or additionally gradually raising a substrate out of a patterning liquid in which it has already been immersed.

Moreover, whilst in the above a patterning liquid in the form of an etchant is used to remove material to change a modulation width of a grating pattern, alternatively a patterning liquid in the form of a depositant may be used instead, which depositant changes the modulation width by depositing material on the surface portion, in particular by depositing material on surface protrusions resulting from modulations over that surface to increase the width of those protrusions.

Figure 5 is block diagram of a second microfabrication apparatus 50 incorporating the microfabrication system 3. The system comprises a controller 52 having an input configured to receive desired grating profile information 54 that defines a desired grating profile i.e. that defines the manner in which the grating linewidth w(x,y) is to (continuously) vary as a function of position (x,y) on the surface. The controller is connected to a drive mechanism 56. The drive mechanism 56 is mechanically coupled to the holder 42 in a manner that enables it to effect controlled movement of the substrate holder to control the immersion level of the supported substrate 5, in particular vertical, linear movement and possibly rotational movement where applicable. As such, the drive mechanism 38 can be controlled to effect the desired gradual immersion of the substrate in and/or removal of the substrate form the patterning liquid 46, detailed above.

The controller 52 converts the desired grating profile information 54 into control signals that are outputted to the drive mechanism during microfabrication procedures, causing the drive mechanism 36 to move the holder to effect the desired profile in the manner described above. The drive mechanism 56 comprises one or more motors that are mechanically coupled to the holder to effect the desired motion.

The controller 52 can be implemented as code executed on a suitable computer system, and the desired profile information 54 can be held in computer storage as data that is accessible to that code when executed.

### Second type of process: for manufacturing gratings with variable depth and slant h(x,y), α(x,y).

A second type of microfabrication process for manufacturing gratings with variable depth h(x,y) and/or slant α(x,y) will now be described.

To achieve high diffraction efficiency, slanted gratings may be used. Suitable patterns can be fabricated on quartz and silicon masters (for transferring to optical components) with aid of ion beam etching (IBE). However, the technology is not limited to these materials.

Using a standard commercial IBE system, it is impossible to create grating areas with variable depth h and/or variable slanting angle α. However, both types of variation may be desirable to optimize the performance of SRG light guides. More generally, micro- and nanofabrication rarely provide the possibility to realize structures that have continuously changing depth or thickness profiles (if ever). The changes are always stepwise, which can ruin the performance of the application. This is true e.g. in the case of SRG light guide based displays.

In contrast, in the following, a customized shutter mechanism is considered which can achieve constantly varying etching profiles, i.e. positionally changing depth h and/or slant angle α. The shutter mechanism is disposed between an ion source (e.g. ion gun) of the IBE tool and a substrate holder configured to hold a substrate to be patterned. The substrate may, for instance, be a quartz substrate to be patterned with an SRG to create a desired optical component, or a silicone master for moulding optical components (e.g. from a polymer).

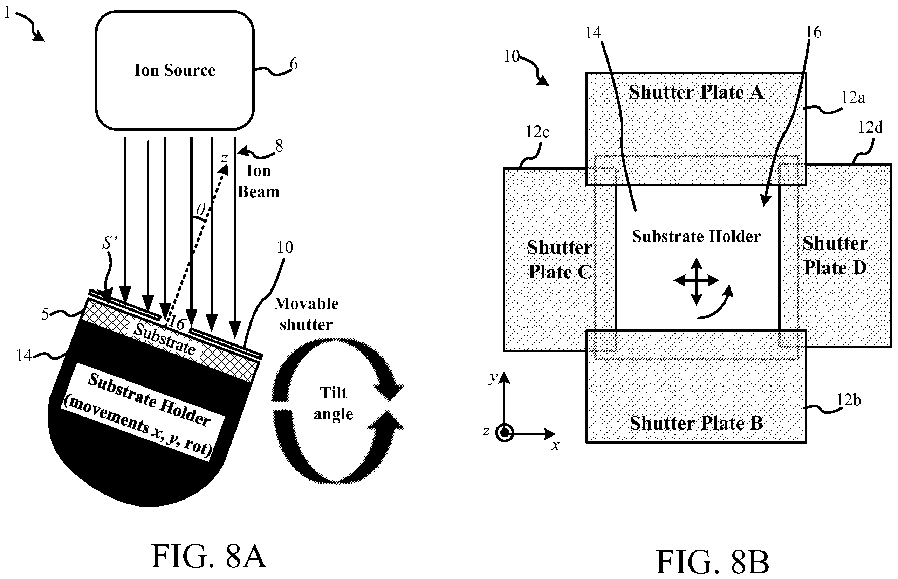

Figure 8A is a schematic illustration showing, from the side, components of a second microfabrication system which forms part of a microfabrication tool for fabricating a microstructure on a substrate (sample) 5 in a microfabrication process. The second system 1 comprises an ion source in the form of an ion gun 6, a substrate holder (sample holder) 14, which supports the substrate 5, and a partitioning system in the form of a shutter mechanism 10.

The ion gun 6 can be activated to generate a beam of ions 8 for etching a substrate, either by chemically reacting with parts of the substrate that it encounters, physically dislodging those parts, or a combination of both. The ions may for instance be of a type that react with quartz or silicone (or other suitable material) as desired, and suitable beam compositions will be apparent to the skilled person.

The shutter mechanism is disposed between the substrate holder 14 and the ion source 6 and is arranged to provide an aperture 16. The ion gun 6 is forward of the aperture 16 and is arranged such that the beam 8 is directed towards and encompasses the aperture 16. The substrate 5 is supported behind the aperture so that a region of the outer surface S' of the substrate 5 is visible through the aperture, the visible region having substantially the same size (i.e. area) as the aperture. The shutter mechanism 10 is composed of a material that does not or only minimally reacts with the ions. The shutter mechanism 10 thus inhibits the passage of the beam 8 other than through the aperture, such that the substrate is exposed to only those parts of the beam (i.e. to those beam particles) which pass through the aperture. In this way, the ions of the beam 8 only interact with the region of the surface S' that is visible through the aperture 16, with the remaining parts of the surface S' being shielded from the beam 8. The tool may be contained a process chamber (not shown) to substantially isolate it from the surrounding environment.

The beam 8 is substantially collimated to effect anisotropic (i.e. directional) etching, as discussed in more detail below. The collimation can be achieved, for instance, by inducing suitable electric potentials in the grids inside the ion source 6.

A tilting angle θ between the ion source 6 and the substrate holder 14 (referred to as the "angle of beam incidence") can also be varied to create changing slanting angles. The substrate holder 14 and shutter mechanism 10 can both be tilted relative to the ion gun 6 to vary the tilt angle θ between the normal to the surface S' (labelled as direction z) and the direction of the ion beam 8, such that the shutter tilts with the substrate holder relative to the beam 8. As mentioned, the surface S' lies substantially in a plane referred to herein as the xy-plane; that is, the xy-plane is defined relative to the surface S' of the substrate 5 and can be considered to tilt with the surface S' as θ is varied. Although only a single tilting angle θ is shown in figure 8A (representing angular variation in the plane of the page), the apparatus can also be tilted perpendicular to this (that is, into/out of the page as the figure is viewed) to provide any desired orientation of the surface S' relative to the beam 8. The tilting angle θ is also the angle of incidence of the beam 8 relative to the surface S' i.e. θ is the amount by with the direction of the beam 8 deviated from the normal to the surface S' (referred to herein as the "angle of beam incidence").

The aperture 16 provided by the shutter mechanism 10 has a programmable aperture size. The shutter mechanism 10 may also provide programmable control over the position of the etching aperture 16, with the shutter mechanism 10 being controllable to move the aperture relative to the holder 14 in the xy-plane in some or all directions in the xy-plane. The movements of the aperture 16 (x, y) can be synchronized with the movements (x, y and rotation) of the substrate holder 14 in order to achieve variable and continuously changing etching depths at any point on the substrate. The beam 8 is wide enough to (that is has a beam diameter/area sufficient to) keep the aperture 16 encompassed as it moves relative to the ion gun 6 and/or changes size.

The substrate holder 14 is moveable in the xy-plane in some or all directions underneath the shutter without moving the shutter, which makes it possible to considerably reduce the sizes of the ion gun 6 and the whole tool (as the beam 8 need only encompasses a fixed or maximum aperture size at a fixed aperture location relative to the gun 6). This can reduce the overall cost of the tool considerably.

The shutter mechanism 10 can be constructed e.g. from two separate shutter plate pairs i.e. from four shutter plates in total. An exemplary shutter mechanism 10 is depicted in figure 8B, which is a plan view of part of the tool providing a cross sectional view of the tool in the xy-plane. Four controllable shutter plates 12a-12d are shown which constitute the shutter mechanism 10. The aperture 16 is an open region defined by the intersection of the plates' inner edges. The substrate holder 14 can be seen underneath the shutter 10 (that is underneath the pates 12). A pair of plates 12a, 12b can be moved in a first direction in the xy-plane - labelled as the y direction - and a second pair of plates 12c, 12d can be moved in a second direction in the xy-plane - labelled as the x direction - substantially perpendicular to the first direction. Each of the plates 12 can be moved individually e.g. using in-vacuum stepper motors (e.g. commercially available in-vacuum stepper motors) coupled to the plates 12 to form different aperture configurations of different sizes and shapes. The substrate holder 15 can be separately moved and rotated in the xy-plane. Using this construction, the shape of the etching aperture is always rectangular, but otherwise its size can be changed freely - including during the ion beam etching process.

The plates 12 are made of molybdenum or other low sputter yield material; there are many such suitable materials, for example some ceramics. Molybdenum is suitable because of its easy manufacturability. The low sputter yield composition of the plates 12 enables them to effectively inhibit the passage of the beam 8 other than through the aperture 16. Each plate 12 can be moved separately using in-vacuum stepper motors.

As indicated, the shutter mechanism 10 is placed into the process chamber so that the plates 12 are between the ion source 6 and the substrate holder 14. The shutter plates 12 are positioned as close to the surface S' of the substrate 5 as possible to improve the etching accuracy e.g. with a separation of about 1mm (or less, depending on e.g. the loading mechanism of the substrates). At the upper limit, a maximum separation of about 5mm may be imposed. The mounting of the shutter mechanism 10 into the process chamber is done in a manner which allows independent movement (xy-planar motion and rotation) of the substrate holder 14 without moving the shutter 10. However, when the substrate holder 14 is tilted relative to ion source 6, the shutter follows the tilting as shown in figure 8A (the substrate holder and the partitioning system thereby remaining aligned with one another). If the etching aperture 16 is approximately in the middle of the chamber while the substrate is moving, the diameter of the ion source is defined by the largest portion of the surface S' that is to be exposed at any given time during the microfabrication process taking in to account the beam homogeneity (as this sets the maximum required aperture size, and the beam need only encompasses the aperture). This is in contrast to existing ion-beam etching techniques where the size of the substrate (that is the size of the surface S', or at least the portion of S' to be etched) dictates the ion source diameter. Therefore the size and the cost of the IBE tool can be reduced considerably in accordance with the present teachings.

Alternatively, the shutter mechanism can be mounted on a sample holder which can only be rotated relative to shutter (no movement in the xy-plane). This allows the shutter mechanism to be fitted inside a standard, commercially available IBE tool. This may require a larger ion source, because the ion beam must cover the whole substrate area. In this scenario, relative xy-planar motion between the aperture and holder is effected by driving the shutter (and not the holder).

As indicated, the apparatus 1 can be used in the fabrication of grating areas with continuously changing depth and/or slanting angle. Slanted gratings with continuously changing depth and/or slanting angle can be realized with both of the aforementioned shutter configurations.

A grating pattern can be manufactured on the substrate by first coating the whole (or most) of the surface S' in a chromium layer or other protective mark layer (e.g. another metallic layer). The mask layer can then be covered in a photoresist. A two-dimensional image of a desired grating pattern can then be projected onto photoresist using conventional techniques. The photoresist is then developed to remove either the exposed parts or the non-exposed parts (depending on the composition of the photoresist), leaving selective parts of the mask layer visible (i.e. revealing only selective parts) and the remaining parts covered by the remaining photoresist. The uncovered parts of the mask layer can then be removed using conventional etching techniques e.g. an initial ion beam etching process which removes the uncovered parts of the mask but not the parts covered by the photoresist, and which does not substantially affect the substrate itself.

The mask layer material is chosen so that it inhibits the passage of ion of the ion beam 8 i.e. a mask material is chosen that is resistant to the effects of the beam 8, and which thus protects any regions of the surface S' from the effects of the beam 8 that are covered by the mask during the ion beam etching of the substrate. In this manner, when the ion beam 8 is directed towards the substrate, only those parts of surface S' not covered by the mask layer react with the ion beam 8, with the ion beam creating protrusions in the surface S' in those parts (by chemically and/physically dislodging substrate material from only the revealed parts). Thus, the two-dimensional grating image is etched into the substrate 5 by the ion beam to create a three-dimensional grating structure. Because the ion beam 8 is substantially collimated, the etching is anisotropic, resulting in protrusions having substantially straight sides.

To fabricate a diffraction pattern of the type shown in figures 2A and 2B, substantially uniform rectangles of the mask (having a period d and width w and a length that spans the portion of the surface S' on which the pattern is to be fabricated, which may be the entirety of the surface S') may be retained on the surface S', leaving substantially uniform rectangles of the mask which have the same length and a width d*(1-f) (which may the same or similar to the line width w) on the surface S'.

Alternatively a photoresist layer may be applied to the substrate directly and selective regions of the photoresist so that the photo resist functions in a similar manner to the aforementioned mask. However, using a separate metallic mask layer can facilitate better selectivity of etching.

A grating exhibiting a continuous depth gradient can be fabricated e.g. by moving a constant sized etching aperture or by moving the substrate holder underneath a constant sized etching aperture (or both) during the ion beam etching process with variable speed, or more precisely (vector) velocity in the xy-plane. Alternatively, the aperture size may also be varied at the same time.

In more general terms, relative xy-motion between a (constant or variable sized) aperture and a substrate can be effected to create a pattern of changing depth. Varying the speed of the relative motion causes varying exposure time τ (one example of an exposure condition) i.e. with different points (x,y) on at least a portion of the surface S' being subject to different "localized" exposure times τ(x,y). When the relative aperture-substrate motion is faster (resp. slower), points (x,y) remain exposed for less (resp. more) time - thus the exposure time can be increased (resp. decreased) by slowing down (resp. speeding up) the relative motion. Whilst the relative motion is ongoing, the aperture can be considered as moving in the xy-plane relative to the surface S' (regardless of which components are actually being driven).

The speed is varied continuously (i.e. smoothly) as a function of time which causes the localized exposure time τ(x,y) to which each point (x,y) is subject to vary correspondingly smoothly as a function of position in the xy-plane (xy-position). This causes a structure with depth to be created with spatially varying depth h(x,y) (which corresponds to "h" as shown in figures 2A-2C) that varies as a function of xy-position in a correspondingly smooth manner as the depth h(x,y) of the structure at a point (x,y) is determined by the localized exposure time τ(x,y) e.g. as h(x,y)≈R* τ(x,y) where R is an etching rate that may or may not be approximately constant.

The changes in speed are gradual which results in a depth profile that changes correspondingly gradually (i.e. substantially continuously and over a significantly larger distance scale that the grating period d). In practice, the changes in the groove depth h(x,y) are hardly visible (though the effects can be observed from the manner in which light is diffracted). For example, an illustrative case would be to etch gratings whose depth could vary from 300nm to 150 nm in a distance of 10mm along the surface.

The depth gradient of the pattern can be expressed as ∇*h*(*x*, *y*) where ∇ = (∂*ₓ*, ∂*_{y}*) is the gradient function for the xy-plane. As will be apparent, when the aperture size is varied in the manner described above, ∇*h*(*x*, *y*) is non-zero-valued at least some points (x,y) on the surface S' and varies as a substantially continuous function of xy-position on the surface S'.

A grating pattern exhibiting a continuous slanting angle gradient can be fabricated by effecting relative motion between the aperture 16 and the substrate 5, and simultaneously changing the tilting angle between the ion source 6 and the substrate holder 14, so that different regions of the surface S' are subject to different tilting angles (i.e. different angles of beam incidence). The aperture motion and tilting angle are varied in a continuous (i.e. smooth) manner to realize continuously changing slanting angles. For example, the tilting may have a substantially constant angular speed to achieve substantially constant slanting angle gradient.

In more general terms, changing pattern slant can be created by effecting relative tilting motion between the surface S' and the beam 8 (that is, between the shutter-holder system 10/14 and the ion source 6). Varying the relative tilt causes varying angles of beam incidence θ (another example of an exposure condition) i.e. with different points (x,y) on at least a portion of the surface S' being subject to different "localized" angles of beam incidence θ(x,y), where θ(x,y) represents the angle of beam incidence when the point (x,y) is exposed. When the tilt is greater (resp. lesser), the beam 8 is incident on an exposed point (x,y) at a higher (resp. lower) localized angle of incidence θ(x,y).

The beam angle is varied continuously (i.e. smoothly) as a function of time so that the localized beam angle θ(x,y) to which each point (x,y) is subject varies correspondingly smoothly as a function of position (x,y). This causes a structure with spatially varying slanting angle α(x,y) (which corresponds to "α" as shown in figures 2A-2C) that varies as a function of xy-position in a correspondingly smooth manner, because the slant α(x,y)≈θ(x,y).

The changes in tilt θ are gradual which results in a slant profile that changes correspondingly gradually. As with the depth h(x,y), the scale over which the slant α (x,y) changes is sufficiently large compared to the grating period d that α (x,y) can be effectively considered as a substantially continuous mathematical function of xy-position that is defined at every point (x,y) in the relevant portion of the xy-place. For example, an illustrative case would be to manufacture gratings that have variable slant angle from 20° to 40° in a distance of 10 mm, i.e. 2° per mm.

The slant gradient of the pattern can be expressed as ∇α(*x*, *y*). As will be apparent, when the angle of beam incidence is varied in the manner described above, ∇α(*x*, *y*) is non-zero-valued at least some points (x,y) on the surface S' and varies as a substantially continuous function of xy-position on the surface S'.

The shutter plates and/or the substrate holder can be moved, and/or the tilt changed, during the process to create more complex grating profiles, exhibiting continuously and independently varying depth h(x,y) and slant angles α(x,y).

For instance, for a particular fabricated pattern, ∇*h*(*x*, *y*) might be directed in the x direction at some or all points (x,y), which can be achieved by changing the aperture speed as a function of the aperture's current x position (but not y) relative to S' during fabrication, and ∇*α*(*x*, *y*) might be directed in the y direction which can be achieved by changing the tilting angle as a function of the aperture's y position (but not x) relative to S' during fabrication. In general, any desired (and possibly spatially varying) directions of ∇*d*(*x*, *y*) and ∇*α*(*x*, *y*) can be independently achieved by controlling the exposure time α(x,y) and tilt θ(x,y) accordingly as a function of the aperture's xy-position relative to S' during fabrication.

Note that there is no requirement for a point (x,y) to be exposed only in a single window of time e.g. the aperture might pass over any given point (x,y) multiple times during the process - τ(x,y) represents the total time for which the point (x,y) is exposed during the process across one or more exposure windows.

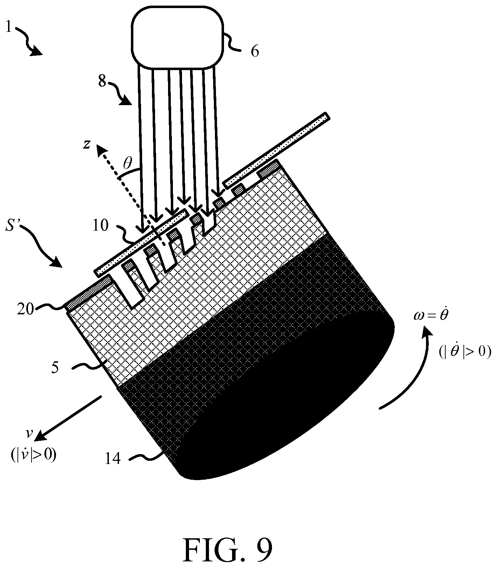

To illustrate some of the principles underlying certain embodiments, a simplified example will now be described with reference to figure 9. Figure 9 is a schematic illustration of the apparatus 1 from the side during a microfabrication process when the ion source 6 is actively generating a substantially collimated particle beam 8. It should be noted that this figure is not to scale and in particular that the distance scale of the surface modulations are greatly enlarged to aid illustration. As mentioned, an illustrative case would be to manufacture gratings that have variable slant angle from 20° to 40° in a distance of 10 mm, i.e. 2° per mm. Over that same distance, the grating depth could vary from 300nm to 150 nm (though this is just an illustrative example).

In the example of figure 9, the substrate holder 14 is moved at a speed v relative to the shutter 10. The substrate 5 is shown with a protective mask layer 20 in the form of a chromium, photoresist or other suitable masking film deposited on the surface S', which selectively covers the surface S' in the manner outlined above. In this example, the substrate holder moves in leftwards at a speed v that smoothly increases, thereby decreasing the exposure time as a function of position (x,y) from left to right across the surface S'. As illustrated, this causes the ion beam to create grooves in the surface S' where not protected by the protective layer 20 whose depth h(x,y) decreases from left to right as a function of position (x,y) due to the more limited exposure.

Simultaneously, the substrate holder is increased from an initial tilting angle at a uniform angular speed ω, thereby resulting in more pronounced beam slant relative to the surface S' as a function of position (x,y) from left to right. In the simplified example of figure 4, the initial tilting angle is around 0 degrees so as to initially create grooves with sides substantially perpendicular to S' (as can be seen on the left-hand side), but this is only an example and the initial tilting angle can be any desired angle. As illustrated, this causes the ion beam to create the grooves in the surface S' with slant angles α(x,y) that increases from left to right as a function of position (x,y) due to the changing beam orientation 8 relative to the surface during the microfabrication procedure.

Any of the gratings manufactured using the above-described techniques can have any desired shape (trapezoidal, sinusoidal etc.), with the wall angle *γ* set by e.g. by choosing an appropriate proportion of reactive and non-reactive gases ("etching parameters") when etching the substrate. By changing these etching parameters as the aperture/substrate moves, the wall angle *γ* can be made to vary over the substrate's surface as desired. Typically, this is not expected to vary gradually in the same manner as the linewidth, though that possibility is not excluded.

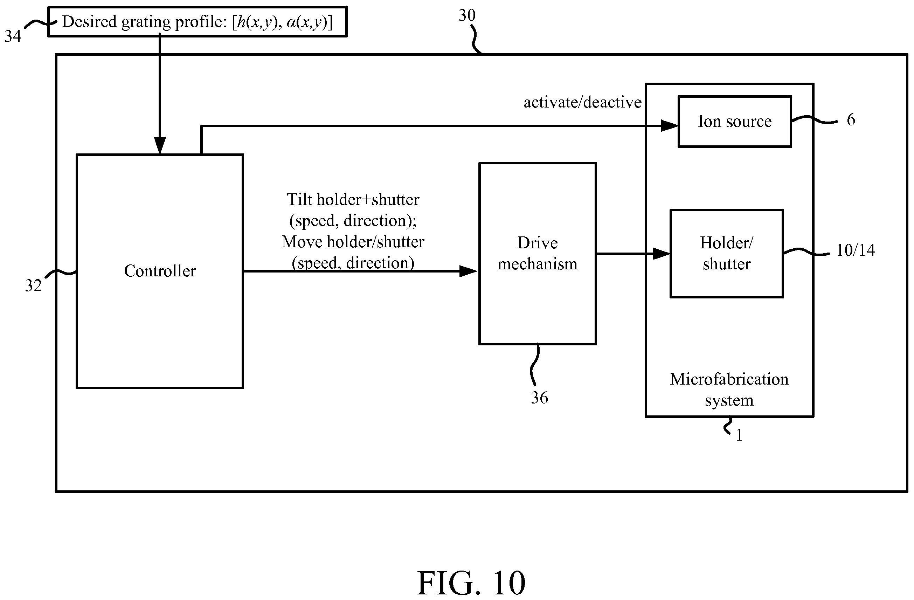

Figure 10 is block diagram of a second microfabrication apparatus 30 incorporating the second microfabrication system 1. The system comprises a controller 32 having an input configured to receive desired grating profile information 34 that defines a desired grating profile i.e. that defines the manner in which the grating depth h(x,y) and/or the slant angle α(x,y) are to (continuously) vary as a function of position (x,y) on the surface. The controller has a first output connected to activate/deactivate the ion source 6 at the start/end of a microfabrication procedure in which a grating pattern having the desired grating profile is fabricated on the substrate. The controller is connected to a drive mechanism 36 of the microfabrication tool. The drive mechanism 36 is mechanically coupled to the shutter 10 and/or holder 14 in a manner that enables it to effect controlled movement of the substrate holder 14 and/or the shutter 10. As such, the drive mechanism 38 can be controlled to effect the desired xy-planar and/or rotation motion when the beam is active during microfabrication, detailed above.

The controller 32 converts the desired grating profile information 34 into control signals that are outputted to the drive mechanism during the microfabrication procedure, causing the drive mechanism 36 to move and/or tilt the holder and/or shutter to effect the desired profile in the manner described above. The drive mechanism 36 comprises one or more motors, e.g. in-vacuum stepper motors as mentioned above, that are mechanically coupled to the holder and/or shutter to effect the desired motion.

The controller 32 can be implemented as code executed on a suitable computer system, and the desired profile information 34 can be held in computer storage as data that is accessible to that code when executed.

Whilst in the above an aperture is moved to provide constantly varying exposure times across a substrate surface, other types of relative aperture-substrate motion could be used to achieve a similar effect for instance by varying the aperture size. As an example, the plate 12c of figure 8B could be held at a fixed location whilst the plate 12d is continuously moved towards or away from the plate 12c, thereby exposing different points on the substrate's surface S' to a particle beam for different amounts of time during the microfabrication procedure. Further, whilst in the above different points on a substrate's surface are subject to different levels of beam exposure by varying the exposure time, alternatively or additionally the intensity (that is particle flux) of the beam could be altered to achieve a similar effect. Further, whilst in the above a substrate holder and partitioning system are tilted relative to a beam by driving the substrate holder/partitioning system, alternatively or additionally the ion source could be coupled to the drive system and moved thereby to effect the desired relative tilt. Further, whilst for the above shutter construction, the shape of the etching aperture is always rectangular, but otherwise its size can be changed freely, other shutter constructions are also possible which can provide an aperture any desired aperture shape and size. Further, whilst in the above a shutter mechanism is used to provide an aperture of controllable size e.g. as in figure 8B, a partitioning system may be arranged to provide an aperture of fixed size under which a substrate holder is moved and/or which is moved over the holder.

### Combining processes.

As will be apparent the above described processes can be combined so as to manufacture gratings with variable linewidth w(x,y) and variable slant α(x,y) and/or variable depth h(x,y).

For example the ion beam etching techniques of the second type of process can be used to manufacture an initial grating on a substrate exhibiting varying depth h(x,y) and/or slant angle α(x,y), which can then be subjected to the etching techniques of figures 4A-4C or 6A-6D (first type of process) to change the linewidth of that grating.

As another example, the techniques of figures 5A-5D (first type of process) could first be used to create a chromium film (or other protective film) that has varying linewidth, which can then serve as an etching mask in the second type of process so that the pattern is transferred from the mask to the substrate with variable slant and/or depth, in addition to the variable linewidth inherited from the chromium mask.

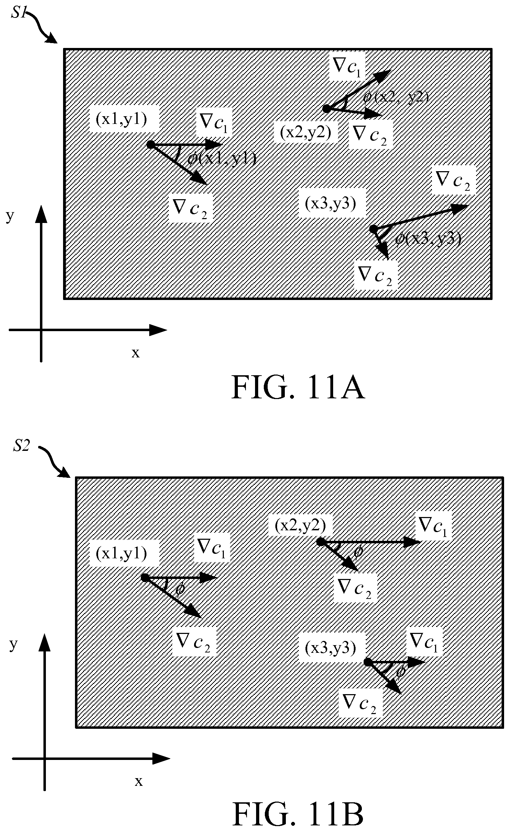

A plan view of a portion of an outer surface S1 of a first exemplary optical component that can be manufactured using the processes disclosed herein is shown in figure 11A. The surface portion visible in figure 11A has a diffraction grating is formed by surface modulations of that portions, which are a series of grooves in at least a portion of the outer surface that are substantially parallel to one another and substantially longer than they are wide. That is, such that adjacent lines are separated by a distance which changes over the full length of those lines by an amount significantly less (e.g. order(s) of magnitude lower) than the grating period, and whose length is significantly greater (e.g. order(s) of magnitude higher) than the grating period. Groove lengths may be of order millimetres or more in practice. The lines may or may not be straight (that is grating with both curved and straight lines can be manufactured as descried e.g. by choosing a suitable lithographic image to be transferred to the grating during manufacture).

The diffraction grating of figure 11A exhibits at least a first groove characteristic c1(x,y) and a second groove characteristic c2(x,y) - which is different and independent from the first characteristic c1(x,y) - at each point (x,y) on the surface portion, both of which affect the manner in which light incident on the diffraction grating is diffracted at that point. The characteristic c1 may be one of, and c2 a different one of, grating depth h(x,y) i.e. the depth of the grooves at that point, grating slant α(x,y) i.e. the slant of the grooves at that point, or grating linewidth w(x,y) i.e. the size of the filling regions between grooves at that point.

The first and second groove characteristics c1(x,y), c2(x,y) gradually vary over the surface portion so as to gradually vary the manner in which the incident light is diffracted at different points on the surface portion, and do so with respective (vector) gradients ∇*c*1, ∇*c*2 (where ∇ = (∂*ₓ*, ∂*_{y}*) is the gradient function in the xy-plane) that have directions that are independent from one another (As these can be chosen independently during manufacture), and which can thus be in different directions to one another at at least some points on the surface portion. This is illustrated in figure 11A at exemplary points (x1, y1), (x2, y2) and (x3,y3), which shows the gradients at those point as vector arrows, whose directions differ at those points by respective angles φ₁(x1, y1), φ₂(x2, y2) and φ₃(x3, y3). Further characteristic(s) may vary over the surface portion in a similar manner.

Figure 11B shows a plan view of a portion of a second exemplary optical component's surface S2 that can also be manufactured in accordance with the presently disclosed techniques. Here, a grating has been manufactured to have first and second grating characteristics c1(x,y), c2(x,y) which vary with a first gradient and a second gradient ∇*c*1, ∇*c*2 respectively. The directions of the first and second gradients ∇*c*1, ∇*c*2 are in first and second directions respectively that are substantially invariant over that portion i.e. those directions are substantially the same at every point (x,y) on that portion, including the exemplary points (x1,y1), (x2,y2) and (x3,y3) shown in figure 11B. Moreover, the first and second directions are different from one another, having an angular separation shown as φ in figure 11B which is substantially the same at each point (x,y) on the surface portion. The directions may or may not be substantially perpendicular to another. Further characteristic(s) may vary over the surface portion in a similar manner.

In both examples mentioned above, the different grating characteristics have grating whose directions differ by desired angles that are substantial (at at least some points in the case of the grating of figure 11A and over substantially the whole surface portion in the case of the grating of figure 11B). Where the gating directions differ by only small, unintended amounts, such as small, unintended variations arising from undesired manufacturing inaccuracies or imprecisions and/or other variations restricted to a similar scale, those directions are not considered to be different to one another. For instance, the present techniques enable gratings to be manufactured with characteristics (such as slant, depth and linewidth) whose gradients differ at least β≈1 degree (order of magnitude) at at least some points on the surface portion - so for the grating of figure 11A, φ(x,y)>β for at least some (x,y) on the surface portion; for 11B, φ>β. The differences can be more if desired e.g. with β≈5 degrees, 10 degrees, 20 degrees, 90 degrees or anything up to 180 degrees. As mentioned above, the manufacturing techniques disclosed herein enable gratings to be manufactured with spatially varying grating characteristics that vary between adjacent grating lines by amounts that are sufficiently small compared to a characteristic scale of the grating itself such as its grating period d - that is which vary sufficiently gradually - that they can be considered effectively continuous mathematical functions of xy-position in relevant portion of the xy-plane, with well-defined, substantially continuous vector gradients (which gradients, if they vary in either magnitude and/or direction, also do so as substantially continuous mathematical functions of xy-position). This is in contrast to, say, step-wise changes in grating characteristics, wherein the grating characteristics vary substantially as step-wise functions. As indicated, references to "points" and "gradients" (or similar) in the following claims are to be construed accordingly with this perspective in mind.

The grating profiles of figures 11A and 11B are exemplary, and many different types of desired gratings with independently varying grating characteristics can be manufactured using any of the aforementioned processes or combinations thereof, as will be apparent to the skilled person in view of the teaching presented herein.

Any of the gratings manufactured using the techniques can have general trapezoidal shapes (including but not limited to binary and triangular shapes), with the wall angle *γ* set by e.g. by choosing an appropriate proportion of reactive and non-reactive gases (etching parameters) in the second type of process in which the substrate itself is etched. By changing these etching parameters during the second type of process as the aperture/substrate moves, the wall angle *γ* can be made to vary over the substrate's surface as desired. Typically, this is not expected to vary gradually in the same manner as the linewidth, slant and depth, though that possibility is not excluded. Etching of shapes other than trapezoidal forms (e.g. sinusoidal) can be achieved by making appropriate modifications to the protective mask.

It should be noted that the linewidth may be changed slightly in the ion beam etching process of the substrate itself (i.e. in the second type of process), because of wall angles (parameters) and how the etching mask is worn out. However, this changing linewidth can be taken into account when dip etching the grating lines (in the first type of process) and thus the relevant characteristics can still be independent.

Whilst the above considers substantially software-implemented controllers 32, 52, the functionality of the controllers can be implemented using software, firmware, hardware (e.g., fixed logic circuitry), or a combination of these implementations. The terms "module," "functionality," "component" and "logic" as used herein generally represent, where applicable, software, firmware, hardware, or a combination thereof. In the case of a software implementation, the module, functionality, or logic represents program code that performs specified tasks when executed on a processor (e.g. CPU or CPUs). The program code can be stored in one or more computer readable memory devices. The features of the techniques described below are platform-independent, meaning that the techniques may be implemented on a variety of commercial computing platforms having a variety of processors.

For example, an apparatus (e.g. 30, 50) may also include an entity (e.g. software) that causes hardware of a computer of the apparatus to perform operations, e.g., processors functional blocks, and so on. For example, the computer may include a computer-readable medium that may be configured to maintain instructions that cause the computer, and more particularly the operating system and associated hardware of the computer to perform operations. Thus, the instructions function to configure the operating system and associated hardware to perform the operations and in this way result in transformation of the operating system and associated hardware to perform functions. The instructions may be provided by the computer-readable medium to the computer through a variety of different configurations.

One such configuration of a computer-readable medium is signal bearing medium and thus is configured to transmit the instructions (e.g. as a carrier wave) to the computing device, such as via a network. The computer-readable medium may also be configured as a computer-readable storage medium and thus is not a signal bearing medium. Examples of a computer-readable storage medium include a random-access memory (RAM), read-only memory (ROM), an optical disc, flash memory, hard disk memory, and other memory devices that may us magnetic, optical, and other techniques to store instructions and other data.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. An optical component (2) for use in an optical system, wherein the optical component (2) has an outer surface and a diffraction grating (4) is formed by a series of grooves in at least a portion of the outer surface that are substantially parallel to one another and substantially longer than they are wide, the diffraction grating (4) having a grating period of order 10² or 10³ nm; wherein the diffraction grating (4) exhibits at least a first and a second groove characteristic at each point on the surface portion which both affect the manner in which light incident on the diffraction grating is diffracted at that point; **characterised in that** the first and second groove characteristics gradually vary over the surface portion so as to gradually vary the manner in which the incident light is diffracted at different points on the surface portion, the first and second groove characteristics varying with respective gradients that are in different directions to one another at at least some points on the surface portion, wherein the first groove characteristic is one of and the second groove characteristic is a different one of: gradually varying slant which does not change by more than the order of 10⁻³ degrees over a single grating period, gradually varying depth which does not change by more than the order of 10⁻² nm over a single grating period and gradually varying linewidth which does not change by more than the order of 10⁻² nm over a single grating period.

2. An optical component according to claim 1 wherein the diffraction grating exhibits a third groove characteristic at each point which also affects the manner in which light incident on the diffraction grating is diffracted at that point, and which also gradually varies over the surface portion so as to gradually vary the manner in which the incident light is diffracted at different points on the surface portion.

3. An optical component according to claim 2 wherein the third groove characteristic varies with a gradient that is in a different direction to the first and second characteristics at at least some points on the surface portion.

4. An optical component according to claim 2 wherein one of the first, second and third characteristics is grating slant, another of those characteristics is grating depth, and yet another of those characteristics is grating linewidth.

5. A display system comprising an optical component according to any preceding claim, the optical component configured for use as a waveguide, and a light engine coupled to the optical component, the light engine configured to generate a desired image, wherein the optical component is arranged to transport light of the image from the light engine to a user's eye to make the image visible to the user.

6. A display system according to claim 5 embodied in a wearable headset.

## Patentansprüche

1. Optische Komponente (2) zur Verwendung in einem optischen System, wobei die optische Komponente (2) eine Außenfläche hat und ein Beugungsgitter (4) von einer Reihe von Furchen in mindestens einem Abschnitt der Außenfläche gebildet wird, die im Wesentlichen zueinander parallel sind und im Wesentlichen länger als breit sind, wobei das Beugungsgitter (4) eine Gitterperiode von der Größenordnung 10² oder 10³ nm hat;
wobei das Beugungsgitter (4) mindestens ein erstes und ein zweites Furchenmerkmal an jedem Punkt auf dem Flächenabschnitt aufweist, die sich beide auf die Weise auswirken, in der Licht, das auf das Beugungsgitter auffällt, an jenem Punkt gebeugt wird; **dadurch gekennzeichnet, dass**
das erste und das zweite Furchenmerkmal über den Flächenabschnitt graduell variieren, um die Weise graduell zu variieren, in der das auffallende Licht an unterschiedlichen Punkten auf dem Flächenabschnitt gebeugt wird, wobei das erste und das zweite Furchenmerkmal mit jeweiligen Gradienten variieren, die an mindestens einigen Punkten auf dem Flächenabschnitt zueinander in unterschiedlichen Richtungen sind, wobei das erste Furchenmerkmal eines der folgenden und das zweite Furchenmerkmal ein anderes der folgenden ist: graduell variierende Neigung, die sich über eine einzige Gitterperiode nicht um mehr als die Größenordnung von 10⁻³ Grad ändert, graduell variierende Tiefe, die sich über eine einzige Gitterperiode nicht um mehr als die Größenordnung von 10⁻² ändert, und graduell variierende Linienbreite, die sich über eine einzige Gitterperiode nicht um mehr als die Größenordnung von 10⁻² ändert.

2. Optische Komponente nach Anspruch 1, wobei das Beugungsgitter ein drittes Furchenmerkmal an jedem Punkt aufweist, das sich ebenfalls auf die Weise auswirkt, in der Licht, das auf das Beugungsgitter auffällt, an jenem Punkt gebeugt wird, und das ebenfalls über den Flächenabschnitt graduell variiert, um die Weise graduell zu variieren, in der das auffallende Licht an unterschiedlichen Punkten auf dem Flächenabschnitt gebeugt wird.

3. Optische Komponente nach Anspruch 2, wobei das dritte Furchenmerkmal mit einem Gradienten variiert, der in einer anderen Richtung zu dem ersten und dem zweiten Merkmal an mindestens einigen Punkten auf dem Flächenabschnitt ist.

4. Optische Komponente nach Anspruch 2, wobei eines des ersten, des zweiten und des dritten Merkmals eine Gitterneigung ist, ein anderes dieser Merkmale eine Gittertiefe ist und noch ein anderes dieser Merkmale eine Gitterlinienbreite ist.

5. Anzeigesystem, umfassend eine optische Komponente nach einem vorhergehenden Anspruch, wobei die optische Komponente zur Verwendung als ein Wellenleiter konfiguriert ist, und einen Lichtgenerator, der an die optische Komponente gekoppelt ist, wobei der Lichtgenerator dazu konfiguriert ist, ein gewünschtes Bild zu erzeugen, wobei die optische Komponente dazu eingerichtet ist, Licht des Bilds von dem Lichtgenerator zu einem Auge eines Benutzers zu transportieren, um das Bild für den Benutzer sichtbar zu machen.

6. Anzeigesystem nach Anspruch 5, das in einem tragbaren Headset verkörpert ist.

## Revendications

1. Composant optique (2) destiné à être utilisé dans un système optique, dans lequel le composant optique (2) comprend une surface externe, et un réseau diffractif (4) est formé d'une série de sillons dans au moins une partie de la surface externe qui sont pratiquement parallèles les uns aux autres et pratiquement plus longs qu'ils ne sont larges, le réseau diffractif (4) ayant une période de division de l'ordre de 10² ou de 10³ nm ;
dans lequel le réseau diffractif (4) présente au moins une première et une deuxième caractéristiques des sillons à chaque point de la partie de la surface, qui toutes deux affectent la manière dont l'incidence de la lumière sur le réseau diffractif est diffractée à ce point ;
**caractérisé en ce que** la première et la deuxième caractéristiques des sillons varient graduellement sur la partie de la surface de sorte à graduellement varier la manière dont la lumière incidente est diffractée à différents points de la partie de la surface, la première et la deuxième caractéristiques des sillons variant avec des gradients respectives qui vont dans des directions différentes les uns des autres à au moins certains points de la partie de la surface, dans lequel la première caractéristique des sillons est une caractéristique et la deuxième caractéristique des sillons est une caractéristique différente : d'une distance oblique à variation graduelle qui ne change pas de plus de 10⁻³ degrés sur une seule période de division, d'une profondeur à variation graduelle qui ne change pas de plus de 10⁻² nm sur une seule période de division et d'une largeur de ligne à variation graduelle qui ne change pas de plus de 10⁻² nm sur une seule période de division.

2. Composant optique selon la revendication 1, dans lequel le réseau diffractif présente une troisième caractéristique des sillons à chaque point, qui affecte également la manière dont l'incidence de la lumière sur le réseau diffractif est diffractée à ce point, et qui également varie graduellement sur la partie de la surface de sorte à graduellement varier la manière dont la lumière incidente est diffractée à différents points de la partie de la surface.

3. Composant optique selon la revendication 2, dans lequel la troisième caractéristique des sillons varie avec un gradient qui est dans une direction différente à la première et à la deuxième caractéristiques à au moins certains points de la partie de la surface.

4. Composant optique selon la revendication 2, dans lequel une de première, de la deuxième et de la troisième caractéristiques est une distance oblique de réseau, une autre de ces caractéristiques est une profondeur de réseau, et encore une autre de ces caractéristiques est une largeur de ligne de réseau.

5. Système d'affichage comprenant un composant optique selon l'une quelconque des revendications précédentes, le composant optique configuré pour être utilisé comme un guide d'ondes, et un moteur lumineux couplé à un composant optique, le moteur lumineux configuré pour générer une image désirée, dans lequel le composant optique est agencé pour transporter de la lumière de l'image depuis le moteur lumineux jusqu'à l'oeil d'un utilisateur pour que l'utilisateur puisse voir l'image.

6. Système d'affichage selon la revendication 5, intégré à un casque portable.
